# EUROPÄISCHE PATENTSCHRIFT

(11) **EP 4 056 023 B1**
(45) Veröffentlichungstag und Bekanntmachung des Hinweises auf die Patenterteilung: **17.12.2025**
(21) Anmeldenummer: 22160744.3
(22) Anmeldetag: 08.03.2022
(51) Int. Cl.: A01D 90/04, A01F 15/10

(54) **ERNTEMASCHINE UMFASSEND EINEN FÖRDERROTOR MIT ROTORZINKEN MIT EINER SICH IN UMFANGSRICHTUNG ERSTRECKENDEN ABFLACHUNG AM ZINKENENDE**
HARVESTER COMPRISING A CONVEYOR ROTOR WITH ROTOR TINES HAVING A CIRCUMFERENTIALLY EXTENDING FLATTENING AT THE TINE END
RÉCOLTEUSE COMPRENANT UN ROTOR CONVOYEUR MUNI DE DENTS DE ROTOR PRÉSENTANT UN APLATISSEMENT À L'EXTRÉMITÉ DES DENTS S'ÉTENDANT DANS LA DIRECTION CIRCONFÉRENTIELLE

(30) Priorität: 09.03.2021 DE 202021101179 U
(43) Veröffentlichungstag der Anmeldung: 14.09.2022
(73) Patentinhaber: Pöttinger Landtechnik GmbH, 4710 Grieskirchen (AT)
(72) Erfinder: Indra, Fabian, 4710 Grieskirchen (AT); Lengauer, Reinhold, 4710 Grieskirchen (AT); Marböck, Simon, 4710 Grieskirchen (AT)
(74) Vertreter: Lorenz Seidler Gossel Part. mbB

(56) Entgegenhaltungen:
- EP-A1- 0 659 332
- DE-A1- 102016 217 609
- DE-A1- 3 334 045
- DE-A1- 3 640 317

## Beschreibung

Die vorliegende Erfindung betrifft allgemein Erntemaschinen, die mittels eines Förderrotors Erntegut durch einen Förderkanal hindurch in einen Speicher- und/oder Pressenraum fördern. Die Erfindung betrifft dabei **eine** Erntemaschine, deren Förderrotor Förderzinken aufweist, die bezüglich einer Rotordrehachse abstehen und sich bei Betrachtung in Richtung der Rotordrehachse von einem Wurzelabschnitt zu einem auskragenden Zinkenende hin verjüngen.

Solche Förderrotoren werden beispielsweise in Ladewagen oder Ballenpressen eingesetzt, um das von der Pickup vom Boden aufgenommene Erntegut durch einen Förderkanal hindurch in den Laderaum des Ladewagens bzw. den Pressenraum der Ballenpresse zu fördern, wobei der Förderrotor um eine liegende, sich quer zur Fahrtrichtung erstreckende Rotordrehachse rotieren kann und üblicherweise eine Vielzahl von Förderzinken aufweist, die in mehreren, über den Umfang verteilten Reihen verteilt angeordnet sein können, wobei sich die Reihen parallel zur Drehachse oder leicht wendelförmig um die Drehachse herum oder auch in anderer Weise verschränkt erstrecken können. Über die Breite des Rotors bzw. entlang der Rotordrehachse sind dabei üblicherweise eine Vielzahl von Förderzinken nebeneinander und voneinander beabstandet angeordnet, um eine ausreichende Förderwirkung über die Breite des Rotors zu haben.

Dem Förderrotor kann dabei ein Schneidwerk zugeordnet sein, das mehrere in den Förderkanal hineinragende Messer umfassen kann, die in die Zwischenräume zwischen benachbarten Förderzinken eintauchen, sodass die vorbeistreifenden Förderzinken das Erntegut auf die Messer treiben und dort zerschneiden.

Der genannte Förderkanal wird dabei, unabhängig vom genannten Schneidwerk, entlang des Außenumfangs des Förderrotors durch eine Einfassungswand begrenzt, die einen Sektor des Rotors wannenförmig einfasst bzw. sich um den Rotor außenumfangsseitig herumschmiegt, sodass das Erntegut nicht ungewollt von den Rotorzinken abgestreift werden kann. Die genannte Einfassungswand kann beispielsweise aus Blech bestehen und schlitzförmige Ausnehmungen aufweisen, durch die hindurch die Messer des Schneidwerks in den Schneidkanal eintreten können.

Die Förderzinken des Förderrotors unterliegen dabei vielfältigen Anforderungen, um das Erntegut möglichst futterschonend und effizient durch den Förderkanal hindurchzufördern. Einerseits soll im Bereich des Schneidwerks eine stabile, kräftige Förderwirkung erzielt werden, um das Erntegut verlässlich an den Schneidmessern vorbei zu fördern und die Schneidwirkung zu erzielen. Andererseits soll im Auslaufbereich des Rotors das Erntegut leicht von den Förderzinken abgestriffen werden, um verlässlich in den Lade- bzw. Pressenraum zu strömen. In jedem Fall soll eine Verstopfung oder ein Schoppern mit unrundem Lauf und übermäßigen Reaktionskräften vermieden werden.

Um diesen vielfältigen Anforderungen gerecht zu werden, haben die Förderzinken oft eine säbelförmige Kontur, die zum Zinkenende hin spitz zuläuft und bei der sich die in Umlaufrichtung vordere Kante des Förderzinkens bogenförmig zurückbiegt, das heißt nach außen von der Rotorachse weg entgegen der Drehrichtung zurückgebogen ist, um eine zu große Aggressivität der Förderzinken zu vermeiden und ein sanftes Einstechen und Ablaufen zu gewährleisten. Dabei ist von Bedeutung, dass die Fördergeschwindigkeit der umlaufenden Rotorzinken aufgrund des zunehmenden Radius zu den Zinkenspitzen hin größer wird. Gleichzeitig spielt das Spaltmaß zwischen den auskragenden Zinkenenden und der den Förderkanal einfassenden Wandung eine wichtige Rolle. Einerseits muss ein gewisses Spaltmaß vorhanden sein, andererseits darf dies nicht zu groß sein, da ansonsten die Förderwirkung im Bereich der schnelllaufenden Förderzinkenspitzen nicht mehr gewährleistet wäre.

Um ein sanftes Einstechen der Förderzinken im Zulauf des Erntegutstroms, der üblicherweise von der Pickup her kommt, zu gewährleisten, laufen die Förderzinken üblicherweise zum auskragenden Zinkenende hin mehr oder minder spitz zu bzw. sind die Zinkenenden oft nur unter einem kleinen Radius abgerundet, um den Widerstand beim Einstechen kleinzuhalten.

Förderrotoren mit solchen Förderzinken, die zum auskragenden Zinkenende hin spitz zulaufen, sind beispielsweise aus der US 2016/366827 A1, der DE 203 083 69 U1 oder der EP 0 659 332 A1 bekannt.

Für spezielle Einsatzzwecke wurden auch schon andere Förderzinken vorgeschlagen, beispielsweise mit in Förderrichtung vorspringenden Nasen am äußeren Ende der Förderzinken, um bei schwierig zu förderndem Gut wie kurz geschnittenem Stroh eine ausreichende Förderwirkung zu haben, vgl. DE 10 2016 217 609 A1. Aus der US 2008/290 198 A1 sind ferner generell trapezförmige Förderzinken bekannt, um hinsichtlich der Einstechtiefe veränderbare Messer nutzen zu können, was insgesamt aber einer futterschonenden, energieeffizienten Förderung abträglich ist und zu einem unrunden Lauf mit Verstopfungsgefahr und hohem Einstechwiderstand führt. Ähnliche trapezförmige Förderzinken verwenden auch die Schriften DE 36 40 317 A1 und DE 33 34 045 A1.

Aufgrund der ständigen Relativbewegung und Reibung zwischen Erntegut und Förderzinken unterliegen die Förderzinken einem kontinuierlichem Verschleiß, der beim Einsatz eines Schneidwerks aufgrund des ansteigenden Förderwiderstands nochmals zunimmt, insbesondere wenn für eine kurze Schnittgutlänge viele Messer gefahren werden. Eine weitere Erhöhung des Verschleißes an den Förderzinken ergibt sich durch Verschmutzungen im Erntegut wie Erdklumpen, Sand oder Steine.

Besonders kritisch wirkt sich der Verschleiß an den auskragenden Zinkenenden aus, wenn die Förderzinken durch den Verschleiß kürzer werden und dadurch das Spaltmaß zwischen den Zinkenenden und der den Förderkanal begrenzenden Einfassungswand zunimmt. Wird das Spaltmaß zu groß, lässt die Förderwirkung nach. Gleichzeitig kann es durch Materialanhäufungen zwischen Förderzinken und Einfassungswand zu Verstopfungen kommen, insbesondere wenn feuchtes Erntegut mit einer höheren Reibung an der Einfassungswand verarbeitet wird.

Hiervon ausgehend liegt der vorliegenden Erfindung die Aufgabe zugrunde, eine verbesserte Erntemaschine und einen verbesserten Förderrotor hierfür zu schaffen, die Nachteile des Standes der Technik vermeiden und letzteren in vorteilhafter Weise weiterbilden. Insbesondere soll der Förderrotor ohne aufwändige Verschleißschutzmaßnahmen wie spezielles Härten oder Oberflächenbeschichten dauerhaft ein widerstandsarmes, verlässliches und futterschonendes Fördern des Ernteguts sicherstellen, ohne die Gefahr von Verstopfungen, hohen Einstechwiderstand und ein erschwertes Abstreifen mit sich zu bringen.

Erfindungsgemäß wird die genannte Aufgabe durch Erntemaschine gemäß Anspruch 1 gelöst. Bevorzugte Ausgestaltungen der Erfindung sind Gegenstand der abhängigen Ansprüche.

Es wird also vorgeschlagen, die Förderzinken des Rotors im Kopfbereich zu verbreitern bzw. in Umlaufrichtung zu verlängern, um auch bei einsetzendem Zinkenverschleiß an der Vorderkante die Länge des Zinkens zu erhalten und eine ungewollte Spaltmaßvergrößerung zwischen Zinkenende und Einfassungswand des Förderkanals zu vermeiden. Erfindungsgemäß besitzt das auskragende Zinkenende der Förderzinken einen stumpfen Zinkenkopf mit einer umfangsseitigen Abflachung, die dem auskragenden Zinkenende, bei Betrachtung des Zinkens in Richtung der Rotordrehachse, eine Breite im Bereich von etwa 30 % bis 200 % der Materialstärke des Förderzinkens gibt. Die genannte Breite des Kopfendes meint deren Erstreckung in bzw. tangential zur Umlaufrichtung bzw. einer Tangente auf die genannte Abflachung, wenn der Zinken in Richtung der Rotordrehachse betrachtet wird.

Der genannten Verbreiterung des Zinkenkopfs bezogen auf die Materialstärke des Förderzinkens liegt die Überlegung zugrunde, dass die Dicke bzw. Materialstärke der Förderzinken einerseits maßgeblich den Verschleiß am Zinken beeinflusst und andererseits bestimmten Randbedingungen unterliegt. An sich könnte dem Verschleiß entgegengewirkt werden, wenn der Zinken immer dicker gemacht bzw. mit größerer Materialstärke ausgebildet werden würde. Andererseits würde dies nicht nur das Einstechen des Förderzinkens in den Erntegutstrom in dessen Zulauf beeinträchtigen, sondern auch das Gewicht des Zinkens erhöhen, was gerade im Bereich der auskragenden Zinkenenden aufgrund der dort höheren Umlaufgeschwindigkeiten und der aufgrund des Radius höheren Trägheitsmoments einen runden Lauf des Förderrotors beeinträchtigen würde. Wird nun der Förderzinken an seinem auskragenden Ende verbreitert, sodass der Zinken nicht mehr in herkömmlicher Weise spitz zuläuft, sondern ein stumpfes Ende nach Art einer Abflachung besitzt, kann ein bei vernünftigen Materialstärken des Förderzinkens unvermeidlicher Verschleiß kompensiert bzw. ohne Auswirkungen auf das Spaltmaß zur Einfassungswand hin neutralisiert werden, da sich der Zinken durch die Kopfverbreiterung auch bei Verschleiß nicht verkürzt, sondern im Wesentlichen seine Länge behält. Der üblicherweise an der Vorderkante, zum auskragenden Zinkenende hin einsetzende Verschleiß rundet zwar die Vorderkante des Förderzinkens zum Zinkenende hin weiter ab, was jedoch durch den verbreiterten, abgeflachten Kopfbereich zumindest zunächst zu keiner Verkürzung des Förderzinkens führt, sodass keine Vergrößerung des Spaltmaßes eintritt und die Förderwirkung erhalten bleibt.

Andererseits kann durch die gewählte Verbreiterung des Zinkenendes im Bereich des 0,3-fachen bis 2-fachen der Materialstärke eine zu große Erhöhung des Einstechwiderstandes im Zulauf des Fördergutstroms vermieden werden.

Die Materialstärke der Förderzinken kann über die Länge des Förderzinkens im Wesentlichen konstant bleiben. Besitzt der Förderzinken eine sich ändernde, insbesondere zur Zinkenspitze hin leicht abnehmende Materialstärke, kann die vorgenannte Verbreiterung des Zinkenkopfes in Bezug gesetzt sein zur mittleren Materialdicke in der äußeren Hälfte des Förderzinkens.

In Weiterbildung der Erfindung kann die genannte Breite des Förderzinkens am Zinkenkopf - bei Betrachtung des Förderzinkens in Richtung der Rotordrehachse - etwa das 0,6-fache bis 1,8-fache der genannten Materialstärke oder etwa das 0,8-fache bis 1,5-fache der genannten Materialstärke betragen. Hierdurch kann ein besonders effizienter Kompromiss zwischen Erhalt der Zinkenlänge bei Verschleiß einerseits und futterschonender Förderwirkung mit leichtem Einstechen im Zulauf erzielt werden.

Um zwischen dem Förderzinken und der den Rotor umschmiegenden Einfassungswand des Förderkanals keine Beeinträchtigungen der Förderwirkung, aber auch keine übermäßigen Verschleißerscheinungen zu erzeugen, **ist** erfindungsgemäß die genannte Breite des auskragenden Zinkenendes an dessen umfangsseitiger Abflachung an das Spaltmaß des Förderrotors zwischen dessen Zinkenenden um der umgebenden Einfassungswand des Förderkanals angepasst und liegt im Bereich von 10% bis 100% des genannten Spaltmaßes. Insbesondere kann vorzugsweise das 0,3-fache bis 0,7-fache des Spaltmaßes betragen. Wird der Zinkenkopf stärker als das Einfache des Spaltmaßes verbreitert, wird das Eintauchen der Förderzinken in das Erntegut erschwert und durch den dann übermäßig breiten Kopf zu dem Erntegut in dem Spalt zwischen Förderzinkenende und Einfassungswand gedrückt, was zu Verstopfungen und übermäßigem Verschleiß und auch Futterbeeinträchtigung führen kann. Wird umgekehrt der Zinkenkopf im Vergleich zum Spaltmaß zu wenig verbreitert, kommt es zu einem vorschnellen Verschleiß mit Beeinträchtigung der Zinkenlänge und damit zu einem Verlust der gewünschten Förderwirkung.

Um in ausreichendem Maße die Zinkenlänge auch bei einem Verschleiß des Zinkens zu erhalten, andererseits aber das Eintauchen des Zinkens in den Erntegutstrom nicht zu sehr zu erschweren, kann die zuvor genannte Breite des Förderzinkens am Zinkenkopf 3 mm bis 30 mm betragen. Insbesondere kann die genannte Breite am Zinkenkopf 8 mm bis 25 mm oder 10 mm bis 20 mm betragen.

Der Förderzinken kann in seinem Verlauf von der Zinkenwurzel zum Zinkenkopf hin grundsätzlich verschieden konturiert sein. Im Zusammenspiel mit der genannten Kopfverbreiterung kann es besonders vorteilhaft sein, wenn der Förderzinken in Richtung der Rotordrehachse betrachtet insgesamt eine säbelförmige Krümmung mit einer bauchigen Vorderkante besitzt, wobei sich die Vorderkante vorzugsweise zumindest in einem äußeren Drittel des Förderzinkens kontinuierlich bauchig bis zur Abflachung am Zinkenende erstrecken kann. Am Zinkenfuß bzw. im Übergangsbereich zur Rotordrehachse kann die Vorderkante des insgesamt säbelförmig gekrümmten Förderzinkens auch leicht konkav ausgebildet sein, um eine hinsichtlich des Spannungsverlaufs günstigen Übergang zur Rotordrehachse zu erzielen und auch ein Hängenbleiben des Ernteguts am Zinkenfuß zu vermeiden. Die Vorderkante des Förderzinkens kann aber zumindest in der äußeren Hälfte des Förderzinkens oder auch in den äußeren zwei Dritteln des Förderzinkens bauchig gekrümmt sein.

Die Hinterkante des Förderzinkens, d.h. die in Drehrichtung nachlaufende Zinkenkante kann insgesamt konkav konturiert sein. Insbesondere kann die Hinterkante in einer äußeren Hälfte des Förderzinkens einen Bereich verstärkter konkaver Krümmung aufweisen, von dem aus der Hinterkantenverlauf zum Zinkenende hin abflachen kann, d.h. von dem genannten Bereich verstärkter konkaver Krümmung aus kann die konkave Krümmung nach außen hin zunehmend größer werden und gegebenenfalls auch unendlich erreichen, so dass die Hinterkante in einem äußeren Zinkenbereich einen geraden Verlauf nehmen kann, bevor die Hinterkante dann in den abgeflachten Kopfbereich übergeht.

Der genannte Bereich verstärkter konkaver Krümmung führt zu einer Verbreiterung des Förderzinkens an der Hinterkante bzw. zu einem verbreiterten Rückenverlauf. Hierdurch kann in der gewünschten Weise eine Verkürzung des Förderzinkens durch Verschleiß an der Vorderkante vermieden werden. Gleichzeitig kann die Vorderkante aber in ihrem Verlauf optimal an die gewünschte Förderwirkung angepasst werden, insbesondere dem zuvor erläuterten säbelförmigen Krümmungsverlauf besitzen.

Insbesondere kann die Hinterkante des Förderzinkens bei Betrachtung der äußeren Hälfte oder auch bei Betrachtung der äußeren zwei Drittel des Förderzinkens insgesamt konkav konturiert sein, so dass beim Anlegen einer Geraden an die besagte Hinterkante ein Spalt entsteht. Dabei kann die Hinterkante durchaus auch gerade Verlaufsabschnitte besitzen.

Unabhängig von dem Krümmungsverlauf der Vorder- und/oder Hinterkanten kann es vorteilhaft sein, wenn die Förderzinken gegenüber der radialen Richtung geneigt angestellt sind, wobei die Förderzinken insbesondere zur Radialrichtung entgegen der Drehrichtung geneigt angestellt sein können. Die Förderzinken können sich sozusagen bildlich gesprochen unter der Last des Ernteguts zurückbiegen, auch wenn die Förderzinken natürlich starr bzw. unnachgiebig ausgebildet sein können.

Insbesondere können die Förderzinken durch eine insgesamt gebogene und/oder abgeknickte Konturierung zum auskragenden Zinkenende hin zunehmend stärker geneigt angestellt sein. Betrachtet man eine Längsmittellinie eines Förderzinkens, die sich mittig zwischen Vorderkante und Hinterkante des Förderzinkens erstreckt, wenn man den Förderzinken in Richtung der Rotordrehachse betrachtet, kann die Neigung der besagten Längsmittellinie gegenüber der Radialrichtung zum auskragenden Zinkenende hin zunehmen, wobei vorzugsweise die genannte Neigung vom Wurzelbereich des Förderzinkens bis zum auskragenden Zinkenende hin kontinuierlich zunehmen kann.

Die Erfindung wird nachfolgend anhand eines bevorzugten Ausführungsbeispiels und zugehörigen Zeichnungen näher erläutert. In den Zeichnungen zeigen:
- Fig. 1:: eine perspektivische Frontansicht der Aufnahmevorrichtung einer Erntemaschine wie Ladewagen oder Ballenpresse mit einem rotatorisch umlaufend antreibbaren Förderrotor zum Fördern von Erntegut durch einen Erntegutkanal,
- Fig. 2:: eine Seitenansicht eines Förderzinkens des Förderrotors aus Fig. 1 bei Betrachtung des Förderzinkens in Richtung der Rotordrehachse, die den verbreiterten Kopfbereich des Förderzinkens zeigt, und
- Fig. 3:: eine vergleichsweise Seitenansicht eines im Kopfbereich unverbreiterten Förderzinkens nach dem Stand der Technik und dessen bei Verschleiß einsetzende Verkürzung.

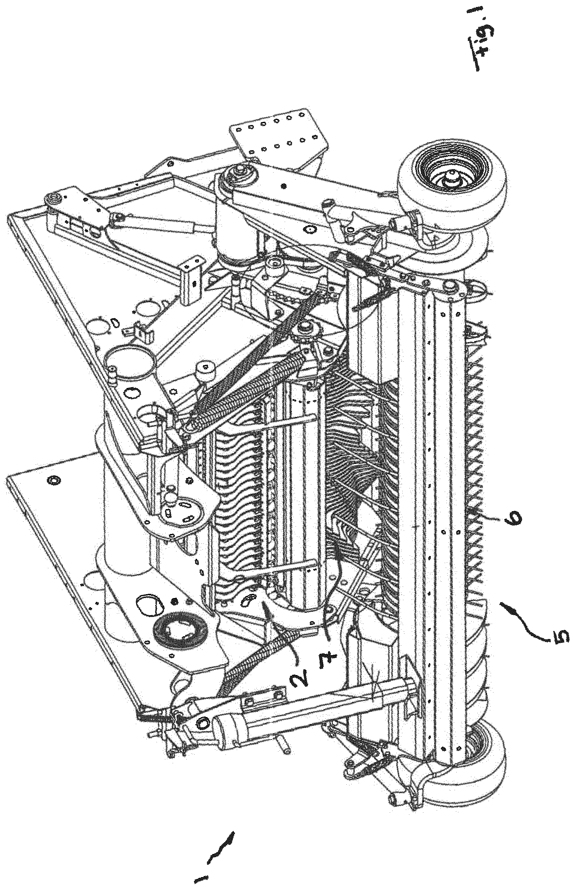

Wie Figur 1 zeigt, kann die Erntemaschine 1 eine Fördervorrichtung 3 mit einem Förderrotor 4 aufweisen, die an eine Aufnahmevorrichtung 5 zum Aufnehmen von Erntegut vom Boden anschließt und das aufgenommene Erntegut in einen Funktionsraum der Erntemaschine 1 wie beispielsweise den Speicherraum eines Ladewagens oder die Ballenformkammer einer Ballenformpresse weiterfördert.

Die genannte Aufnahmevorrichtung 5 kann beispielsweise eine umlaufende Stachelwalze 6 in Form einer Pickup aufweisen, die das Erntegut an den Förderrotor 7 übergibt, welcher das Erntegut dann durch einen Förderkanal 4 hindurch in den genannten Funktionsraum fördert. Dabei kann dem Förderrotor 7 ein Schneidwerk 2 zugeordnet sein, dessen Messer in den genannten Förderkanal 4 hineinragen können.

Wie Figur 1 zeigt, kann der Förderrotor 7 eine Vielzahl von Förderzinken 8 aufweisen, die in mehreren, über den Umfang verteilten Reihen angeordnet sein können, die in sich verschränkt sein oder einen wendelförmigen Verlauf um die Rotordrehachse 9 herum aufweisen können. Die genannte Rotordrehachse 9 kann liegend ausgerichtet sein, beispielsweise quer zur Fahrtrichtung der Erntemaschine 1. Über die Breite des Förderrotors 7 bzw. entlang der Rotordrehachse 9 können eine Vielzahl von Förderzinken 8 nebeneinander und voneinander beabstandet angeordnet sein, vgl. Figur 1.

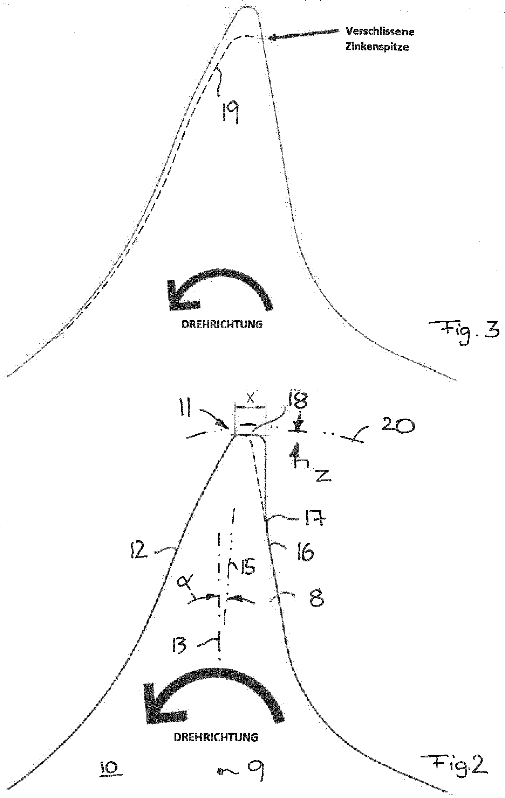

Wie Figur 2 zeigt, kann der Förderzinken 8 sich von einem Zinkenwurzelbereich 10 aus, der im Übergangsbereich zur Rotordrehachse 9 liegt, zum auskragenden Zinkenende 11 hin insgesamt verjüngen, wenn der Förderzinken 8 in Richtung der Rotordrehachse 9 betrachtet wird.

Unabhängig hiervon kann der Förderzinken 8 bei Betrachtung in der genannten Richtung eine insgesamt säbelförmige Konturierung besitzen, wobei die Zinkenvorderkante 12 insgesamt ballig bzw. konvex konturiert sein kann, zumindest in der äußeren, von der Rotordrehachse 9 entfernteren Hälfte des Zinkens. Im Zinkenwurzelbereich 10 kann auch die Vorderkante 12 des Förderzinkens 8 konkav konturiert sein, um einen harmonischen Übergang zur Rotordrehachse zu erzielen.

Unabhängig von der genannten säbelförmigen Konturierung kann der Förderzinken 8 zur Radialrichtung 13 entgegen der Drehrichtung 14 geneigt angestellt sein, wobei der Neigungswinkel α zum freien Zinkenende 11 hin zunehmen kann, vgl. Figur 2, insbesondere wenn eine Längsmittellinie 15 des Förderzinkens in Richtung der Rotordrehachse 9 betrachtet wird.

Die Hinterkante 16 des Förderzinkens 8 kann insgesamt konkav konturiert sein, wenn der Förderzinken 8 mit einer Blickrichtung in Richtung der Drehachse 9 betrachtet wird. Insbesondere kann die Hinterkante 16 in einer äußeren Hälfte des Förderzinkens 8 einen Bereich 17 stärkerer konkaver Krümmung aufweisen, von dem aus sich der Verlauf der Hinterkante 16 zum freien Zinkenende 11 hin abflacht. Insgesamt ist die Hinterkante 16 derart konturiert, dass der Kopfbereich des Förderzinkens 8 verbreitert ist.

Wie Figur 2 zeigt, besitzt der Förderzinken 8 an seinem freien, auskragenden Zinkenende 11 einen stumpfen Zinkenkopf mit einer umfangsseitigen Abflachung 18, die sich tangential zur Umfangsrichtung des Förderrotors erstreckt.

Die genannte Abflachung 18 bildet eine ebene Plateaufläche. Zu den Vorder- und Hinterkanten 12, 16 hin kann die genannte Abflachung 18 abgerundet sein, vgl. Figur 2.

Bei Betrachtung in Richtung der Rotordrehachse 9 besitzt das freie Zinkenende 11 im Bereich der Abflachung 18 eine breite X, wobei die genannte Breite X das Erstreckungsmaß zwischen Zinkenvorderkante 12 und Zinkenhinterkante 16 im Bereich der Abflachung 18 meint und parallel zur Umfangsrichtung und/oder tangential zur Abflachung 18 bestimmt werden kann.

Durch die genannte Rückenverbreiterung, das heißt die stärker nach hinten entgegen der Drehrichtung gezogenen Hinterkante 16 und die damit einhergehende Verbreiterung des Zinkenkopfs kann eine Verkürzung des Förderzinkens 8 durch an der Vorderkante einsetzenden Verschleiß vermieden bzw. reduziert werden. Betrachtet man im Vergleich dazu einen weniger bzw. nicht verbreiterten Zinkenkopf wie ihn Figur 3 zeigt, führt der an der Vorderkante 12 einsetzende Zinkenverschleiß zu einer signifikanten Verkürzung des Förderzinkens 8, wie die strichlierte Verschleißlinie 19 zeigt.

Im Vergleich dazu führt ein entsprechender Verschleiß an dem Förderzinken 8 mit verbreitertem Zinkenkopf, wie ihn Figur 2 zeigt, zu keiner wesentlichen Verkürzung des Förderzinkens 8, da sich der Förderzinken 8 an seinem freien Zinkenende 11 durch die Abflachung 18 näherungsweise parallel zur Umlaufrichtung erstreckt. Der Verschleiß nagt zwar auch an der Vorderseite des Förderzinkens 8. Durch die Abflachung 18 verkürzt sich der Förderzinken 8 dabei jedoch nicht, sondern es erfolgt lediglich eine stärkere Abrundung bzw. Verrundung der Vorderkante 12 bzw. des Übergangs der Zinkenvorderkante 12 in die Abflachung 18.

Die in Figur 2 gezeigte Breite X des Förderzinkens 8 im Bereich des freien Zinkenendes 12 bzw. im Bereich der Abflachung 18 beträgt erfindungsgemäß das 0,3-fache bis 2-fache der Materialstärke des Förderzinkens 8. Die Materialstärke wird dabei in Richtung der Rotordrehachse (9) senkrecht zur Zeichenebene der Figur 3 gemessen sein. Insbesondere kann die Breite X etwa im Bereich von 60 % bis 180 % oder 80 % bis 150 % der genannten Materialstärke betragen.

Zusätzlich wird die genannte Breite X des Zinkenkopfs auch an das Spaltmaß Z zwischen dem freien Zinkenende 11 und der den Förderrotor 3 umgebenden Einfassungswand des Förderkanals 4 angepasst, wobei die Breite X im Bereich von 10 % bis 100 % des genannten Spaltmaßes Z liegt. Insbesondere kann die Breite X etwa das 0,3 bis 0,7-fache des Spaltmaßes Z betragen.

Die Breite X kann vorteilhafterweise 3 mm bis 30 mm betragen. In vorteilhafter Weiterbildung der Erfindung kann die genannte Breite X 8 mm bis 25 mm oder 10 mm bis 20 mm betragen.

## Patentansprüche

1. Erntemaschine mit einem Förderkanal (4) zum Hindurchfördern von Erntegut sowie einem dem Förderkanal (4) zugeordneten Förderrotor mit Förderzinken (8) zum Fördern von Erntegut durch ein Schneidwerk (2) hindurch, wobei der Förderkanal (4) eine den Förderrotor (7) umgebende Rotor-Einfassungswand aufweist und wobei Messer des Schneidwerks (2) in den Förderkanal (4) hineinragen, an denen die Förderzinken (8) des rotierenden Förderrotors (7) zum Zerschneiden des Ernteguts vorbeistreifen, die von einer Rotordrehachse (9) nach außen abstehen und sich, bei Betrachtung in Richtung der Rotordrehachse (9), von einem Zinken-Wurzelabschnitt (10) zu einem auskragenden Zinkenende (11) hin verjüngen, das einen stumpfen Zinkenkopf mit einer umfangsseitigen Abflachung (18) bildet, **dadurch gekennzeichnet, dass** die Abflachung (18) sich in Umlaufrichtung erstreckt und eine in Umlaufrichtung gemessene Breite (X) des Zinkenendes im Bereich der Abflachung (18), bei Betrachtung des Förderzinkens (8) in Richtung der Rotordrehachse (9), im Bereich von 30 % bis 200 % der in Richtung der Rotordrehachse (9) gemessenen Materialstärke des Förderzinkens (8) und im Bereich von 10% bis 100% eines Spaltmaßes (Z) zwischen dem auskragenden Zinkenende (11) und der den Förderrotor umgebenden Rotor-Einfassungswand (20) beträgt.

2. Erntemaschine nach dem vorhergehenden Anspruch, wobei die Breite (X) des auskragenden Zinkenendes (11) im Bereich der Abflachung (18) im Bereich von 60 % bis 180 % oder im Bereich von 80 % bis 150 % der Materialstärke des Förderzinkens (8) beträgt.

3. Erntemaschine nach einem der vorhergehenden Ansprüche, wobei die Breite (X) des auskragenden Zinkenendes (11) im Bereich der Abflachung (18) 3 mm bis 30 mm beträgt.

4. Erntemaschine nach dem vorhergehenden Anspruch, wobei die Breite (X) 8 mm bis 25 mm oder 10 mm bis 20 mm beträgt.

5. Erntemaschine nach einem der vorhergehenden Ansprüche, wobei die Förderzinken (8), bei Betrachtung in Richtung der Rotordrehachse (9), eine säbelförmig gekrümmte Konturierung mit einer bauchigen Vorderkante (12) besitzen, wobei die Vorderkante (12) vorzugsweise zumindest im äußeren Drittel des Förderzinkens (8) kontinuierlich bauchig gekrümmt bis zur Abflachung (18) ausgebildet ist.

6. Erntemaschine nach einem der vorhergehenden Ansprüche, wobei die Hinterkante (16) der Förderzinken (8) insgesamt, bei Betrachtung in Richtung der Rotordrehachse (9), konkav ausgebildet ist.

7. Erntemaschine nach dem vorhergehenden Anspruch, wobei die Hinterkante (16) in einer äußeren Hälfte des Förderzinkens (8) einen Bereich (17) verstärkter konkaver Krümmung besitzt, von dem aus der Verlauf der Hinterkante (16) zum auskragenden Zinkenende (11) hin abflacht.

8. Erntemaschine nach einem der vorhergehenden Ansprüche, wobei die Förderzinken (8) zur Radialrichtung (13) entgegen der Drehrichtung (14) geneigt angestellt sind, wobei die Neigung (α) der Längsmittellinie (15) der Förderzinken (8) zum auskragenden Zinkenende (11) hin zunimmt, insbesondere vom Wurzelbereich (10) des Förderzinkens (8) bis zum auskragenden Zinkenende (11) hin kontinuierlich zunimmt.

9. Erntemaschine nach einem der vorhergehenden Ansprüche, wobei sich der Förderrotor (7) an eine Aufnahmevorrichtung (5) zum Aufnehmen von Erntegut vom Boden anschließt und/oder der genannten Aufnahmevorrichtung (5) nachgeordnet ist.

10. Erntemaschine nach einem der vorhergehenden Ansprüche, wobei der Förderkanal (4), durch den hindurch der Förderrotor (7) Erntegut fördert, in einen Funktionsraum aus der Gruppe Ladewagenspeicherraum oder Ballenformkammer führt.

## Claims

1. Harvester comprising a conveyor channel (4) for conveying harvested crop and a conveyor rotor (7) associated with the conveyor channel (4) having conveyor tines (8) for conveying the harvested crop through a cutting mechanism (2), wherein the conveyor channel (4) comprises a rotor housing wall surrounding the conveyor rotor (7), and wherein cutting blades (2) of the cutting mechanism project into the conveyor channel (4), along which the conveyor tines (8) of the rotating conveyor rotor (7) pass in order to cut the harvested crop,
wherein the conveyor tines (8) project radially outward from a rotor rotational axis (9) and taper, when viewed in the direction of the rotor rotational axis (9), from a tine root section (10) toward a projecting tine tip (11) that forms a blunt tine head with a circumferential flattening (18),
**characterized in that** the flattening (18) extends in the circumferential direction, and a width (X) of the tine tip measured in the circumferential direction, in the region of the flattening (18), when viewing the conveyor tine (8) in the direction of the rotor rotational axis (9), is within a range of 30 % to 200 % of the material thickness of the conveyor tine (8) measured in the direction of the rotor rotational axis (9) and within a range of 10 % to 100 % of a clearance (Z) between the projecting tine tip (11) and the rotor housing wall (20) surrounding the conveyor rotor.

2. Harvester according to the preceding claim, wherein the width (X) of the projecting tine tip (11) in the region of the flattening (18) is within a range of 60 % to 180 %, or within a range of 80 % to 150 %, of the material thickness of the conveyor tine (8).

3. Harvester according to any one of the preceding claims, wherein the width (X) of the projecting tine tip (11) in the region of the flattening (18) is from 3 mm to 30 mm.

4. Harvester according to the preceding claim, wherein the width (X) is from 8 mm to 25 mm or from 10 mm to 20 mm.

5. Harvester according to any one of the preceding claims, wherein the conveyor tines (8), when viewed in the direction of the rotor rotational axis (9), have a curved, sabre-shaped contour with an arcuate leading edge (12), the leading edge (12) preferably being continuously curved in an arcuate manner at least in the outer third of the conveyor tine (8) up to the flattening (18).

6. Harvester according to any one of the preceding claims, wherein a rear edge (16) of the conveyor tines (8) is overall formed in a concave shape when viewed in the direction of the rotor rotational axis (9).

7. Harvester according to the preceding claim, wherein the rear edge (16) has, in an outer half of the conveyor tine (8), a region (17) of intensified concave curvature, from which the course of the rear edge (16) flattens toward the projecting tine tip (11).

8. Harvester according to any one of the preceding claims, wherein the conveyor tines (8) are inclined with respect to the radial direction (13) counter to the direction of rotation (14), the inclination (α) of the longitudinal center line (15) of the conveyor tines (8) increasing toward the projecting tine tip (11), in particular continuously increasing from the tine root section (10) to the projecting tine tip (11).

9. Harvester according to any one of the preceding claims, wherein the conveyor rotor (7) is connected to a pickup device (5) for picking up the harvested crop from the ground and/or is arranged downstream of the pickup device (5).

10. Harvester according to any one of the preceding claims, wherein the conveyor channel (4), through which the conveyor rotor (7) conveys the harvested crop, leads to a functional space selected from the group consisting of a loading-wagon storage chamber and a bale-forming chamber.

## Revendications

1. Moissonneuse avec un canal de transport (4) pour transporter un produit récolté ainsi qu'un rotor de transport associé au canal de transport (4) avec des dents de transport (8) pour transporter le produit récolté à travers un mécanisme de coupe (2), le canal de transport (4) présentant une paroi d'enceinte de rotor entourant le rotor de transport (7) et des lames du mécanisme de coupe (2) faisant saillie dans le canal de transport (4), le long desquelles les dents de transport (8) du rotor de transport rotatif (7) passent afin de couper le produit récolté, lesquelles dépassent vers l'extérieur à partir d'un axe de rotation de rotor (9) et se rétrécissent, considérées dans la direction de l'axe de rotation de rotor (9), d'une section de base de dent (10) vers une extrémité de dent en saillie (11) qui forme une tête de dent émoussée avec un aplatissement circonférentiel (18), **caractérisée en ce que** l'aplatissement (18) s'étend dans la direction circonférentielle et une largeur (X) de l'extrémité de dent mesurée dans la direction circonférentielle, dans la zone de l'aplatissement (18), en considérant la dent de transport (8) dans la direction de l'axe de rotation de rotor (9), est dans la plage de 30 % à 200 % de l'épaisseur de matériau de la dent de transport (8) mesurée dans la direction de l'axe de rotation de rotor (9) et dans la plage de 10 % à 100 % d'une mesure d'interstice (Z) entre l'extrémité de dent en saillie (11) et la paroi d'enceinte de rotor (20) entourant le rotor de transport.

2. Moissonneuse selon la revendication précédente, la largeur (X) de l'extrémité de dent en saillie (11) dans la zone de l'aplatissement (18) étant dans la plage de 60 % à 180 % ou dans la plage de 80 % à 150 % de l'épaisseur de matériau de la dent de transport (8).

3. Moissonneuse selon l'une quelconque des revendications précédentes, la largeur (X) de l'extrémité de dent en saillie (11) dans la zone de l'aplatissement (18) étant de 3 mm à 30 mm.

4. Moissonneuse selon la revendication précédente, la largeur (X) étant de 8 mm à 25 mm ou de 10 mm à 20 mm.

5. Moissonneuse selon l'une quelconque des revendications précédentes, les dents de transport (8), considérées dans la direction de l'axe de rotation de rotor (9), possédant un contour courbé en forme de sabre avec un bord avant galbé (12), le bord avant (12) étant de préférence réalisé pour être continûment courbé de manière galbée au moins dans le tiers extérieur de la dent de transport (8) jusqu'à l'aplatissement (18).

6. Moissonneuse selon l'une quelconque des revendications précédentes, le bord arrière (16) des dents de transport (8) étant globalement réalisé sous forme concave, considéré dans la direction de l'axe de rotation de rotor (9).

7. Moissonneuse selon la revendication précédente, le bord arrière (16) possédant, dans une moitié extérieure de la dent de transport (8), une zone (17) de courbure concave renforcée, à partir de laquelle le tracé du bord arrière (16) s'aplatit vers l'extrémité de dent en saillie (11).

8. Moissonneuse selon l'une quelconque des revendications précédentes, les dents de transport (8) étant inclinées par rapport à la direction radiale (13) à l'encontre de la direction de rotation (14), l'inclinaison (α) de la ligne médiane longitudinale (15) des dents de transport (8) augmentant vers l'extrémité de dent en saillie (11), notamment augmentant de manière continue depuis la zone de base (10) de la dent de transport (8) jusqu'à l'extrémité de dent en saillie (11).

9. Moissonneuse selon l'une quelconque des revendications précédentes, le rotor de transport (7) se raccordant à un dispositif de ramassage (5) destiné à ramasser le produit récolté sur le sol et/ou étant agencé en aval dudit dispositif de ramassage (5).

10. Moissonneuse selon l'une quelconque des revendications précédentes, le canal de transport (4), à travers lequel le rotor de transport (7) transporte le produit récolté, menant à un espace fonctionnel du groupe comprenant l'espace de stockage d'une remorque autochargeuse ou la chambre de formation de balles.
